# EUROPEAN PATENT SPECIFICATION

(11) **EP 4 218 166 B1**
(45) Date of publication and mention of the grant of the patent: **09.12.2026**
(21) Application number: 20793337.5
(22) Date of filing: 16.10.2020
(51) Int. Cl.: H04L 65/611

(54) **METHODS AND DEVICES FOR EFFICIENT MEDIA STREAMING**
VERFAHREN UND VORRICHTUNGEN FÜR EFFIZIENTES MEDIEN-STREAMING
PROCÉDÉS ET DISPOSITIFS DE DIFFUSION EN CONTINU DE MÉDIA EFFICACE

(43) Date of publication of application: 02.08.2023
(73) Proprietor: Huawei Technologies Co., Ltd., Shenzhen, Guangdong 518129 (CN)
(72) Inventor: LOU, Zhe, 80992 Munich (DE); TROSSEN, Dirk, 80992 Munich (DE)
(74) Representative: Roth, Sebastian
(86) International application number: PCT/EP2020/079161
(87) International publication number: WO 2022/078609

(56) References cited:
- US-A1- 2017 257 412
- US-B1- 10 764 347

## Description

### TECHNICAL FIELD

The present disclosure relates to video delivery via content distribution or delivery network (CDN) services.

The present disclosure provides, to this end, a method of operating a streaming client, devices comprising a streaming client, a method of operating a streaming server, a device comprising a streaming server, and a computer program corresponding to one of both methods.

### BACKGROUND

In customer access networks, localized content distribution by CDNs represents a majority of traffic. A CDN serves content to users by duplicating or caching content on an interconnected plurality of servers, which are located closer to the users than the original content server, and directing content requests to the server nearest to the requesting user.

This reduces an impact of unicast service delivery on network utilization, which is a major concern of customer internet service providers (ISPs), as a significant share of their traffic relates to unicast services, and in particular to unsynchronized video traffic such as over-the-top (OTT) video.

Content delivery/distribution may be realized by a variety of concepts. For example, US 2017/257412 A1 discloses an example of an adaptive HTTP streaming technique.

The specific concept of Layer 2 (L2) multicast over path-based forwarding involves a binary encoding of unicast path information, and forming multicast path information through binary OR combination of a plural of unicast path information. This allows for responding to multiple concurrent unicast requests for a same content through an opportunistic ad-hoc multicast delivery of a single HyperText Transfer Protocol (HTTP) response over Layer 2, without requiring explicit multicast tree state to be maintained in intermediate nodes of the underlying Layer 2 network. In view of video streaming, this concept is particularly beneficial for live events involving a video streaming session joined by a large number of participants.

So-called late joiners to an ongoing video streaming session usually are forced onto a live video stream by utilizing synchronization information, such as timestamps. However, late joiners could simply request streaming from an original start of the video streaming session and therefore not join the live video stream at all. Alternatively, late joiners could join and buffer the live video stream, and retrieve the missed content via unicast delivery.

In the HTTP over L2 solution mentioned above, the late joiners' unicast requests could (or could not) be sent via multicast. However, more importantly, the late joiners have no notion of the 'live video stream' and would therefore always be (and remain) late joiners once being late, receiving the whole video streaming session via unicast delivery.

US 2017/257412 A1 discloses techniques for providing media content in a broadcast scenario to a streaming player. To address variations in segment sizes and reception intervals, it proposes estimating the segment availability time for subsequent requests, using a correction value to achieve constant segment reception intervals. One embodiment uses the minBufferTime from the MPD file, which reflects the buffering time required before playback and indicates segment size variation. The estimation can be done by the client or server: the client uses the reception time of the first segment as a reference, while the server uses the original availability time plus end-to-end delay.

US 10 764 347 B1 discloses a framework for storing, processing, and replicating time-associated data streams. Streams from multiple sources are received over a network using an application-layer protocol and divided into fragments. Each fragment is acknowledged via the same protocol. The fragments are individually processed per stream, and actions are taken based on the processing results.

### SUMMARY

In view of the above-mentioned problems and disadvantages, it is an object to allow for late joiners to adhere to their own timing, i.e., not being forced to join a live/main video stream and to miss out on the parts being missed. It is a further object that both main stream and late joiner streams benefit from multicast delivery.

The present invention is defined by the appended independent claims. Further embodiments are set forth in the dependent claims and in the following description and drawings.

A first aspect of the present disclosure provides a method of operating a streaming client. The method comprises sending by the streaming client a request for a first segment of a stream associated with a first timestamp; and in response to the sending of the request: determining that the first timestamp is outside a given time interval that includes a second timestamp, receiving by the streaming client an indication serving to identify a second segment or a third segment of the stream associated with a second timestamp; and receiving by the streaming client the first segment of the stream associated with the first timestamp.

"Streaming" as used herein may refer to delivery of media data, especially video and/or audio media, over a network, as a more or less steady, continuous flow known as a "stream". Streaming allows for playback to start while a remainder of the media data is still being delivered. Streaming may involve a functional split according to a client-server model, wherein one or more streaming clients request a streaming service (i.e., delivery of a media stream) from a streaming server.

A "segment" as used herein may refer to a partitioning of the media data, according to which a sequential delivery of partitions (segments) of the media data may take place.

A "timestamp" as used herein may refer to a time information used in a sequential numbering of events, such as playback of video frames or segments.

An "indication" as used herein may refer to information that serves to identify a segment of a stream, such as a sequential number/index or a uniform resource locator (URL) of the segment.

The indication may be sent by a streaming server in response to the request for the first segment and upon determining that the first timestamp is outside a given time interval that includes the second timestamp.

By the method of the first aspect, late joiners are provided with a notion of the 'main/live video stream' and enabled to retrieve (and buffer) the same video streaming session starting from different timestamps.

Thereby, late joiners are allowed to adhere to their own timing by retrieving (and rendering) the video streaming session starting from the first timestamp, and by being enabled to retrieve (and buffer) the same video streaming session starting from the second timestamp. As a result, late joiners are not forced to join the main/live video stream and to miss out on the parts being missed.

Thereby, both main/live stream and late joiner streams may benefit from opportunistic ad-hoc multicast delivery. More specifically, streaming to participants joining the video streaming session substantially concurrently with the second timestamp relating to the main/live stream benefits from multicast delivery through a single multicast response to the individual unicast requests of these participants for the same content. Likewise, streaming to late joiners joining the same video streaming session substantially off the second timestamp also benefits from multicast delivery through a single multicast response to the individual unicast requests of these late joiners for the same content. In summary, efficient media streaming is achieved by synchronizing late joining streaming clients to a late joiner stream and to a main/live stream, which respectively may be shared among the late joining streaming clients via opportunistic ad-hoc multicast delivery.

If however the first timestamp is within the given time interval, the streaming client may receive the second segment or the third segment of the stream associated with the second timestamp.

Thereby, participants joining the video streaming session substantially concurrently with the second timestamp relating to the main/live stream retrieve the main/live stream right away, thus participating in opportunistic ad-hoc multicast delivery of the main/live stream.

Preferably, the second segment or the third segment of the stream associated with the second timestamp is being requested by at least one further streaming client.

Thereby, the second timestamp may correspond to any instant of the video streaming session for which opportunistic ad-hoc multicast delivery may be beneficial, including the timestamp of the main/live stream.

Preferably, the receiving of the indication comprises receiving the indication encoded in one part of a HTTP multipart message and receiving the first segment of the stream associated with the first timestamp in another part of the HTTP multipart message.

A "HTTP multipart message" as used herein may refer to a communication intended for consumption by one or more recipients other than its sender, having an encoding in conformity with the HTTP, and including multiple message parts of various types of content, such as text/plain, video/mpeg, etc.

Thereby, the indication of the second segment relating to the main/live stream may be communicated in a backwards-compatible manner, since HTTP multipart message encoding is standardized and an unmodified streaming client will simply ignore any unknown multi-form body entry that indicates the second segment.

Preferably, the receiving of the indication comprises receiving the indication encoded in a manifest file of the stream.

A "manifest file" as used herein may refer to a file retrieved by a streaming client in order to identify alternative streams and their respective URLs. Manifest files are used in connection with HTTP-based adaptive streaming technologies such as Moving Pictures Expert Group (MPEG) Dynamic Adaptive Streaming over HTTP (DASH), for example. A DASH manifest file has an encoding in conformity with the Extensible Markup Language (XML) and identifies, inter alia, streaming content partitioned into indexed (media) segments.

Thereby, the indication of the second segment relating to the main/live stream may be communicated in another backwards-compatible manner, since manifest file encoding is standardized and an unmodified streaming client will simply ignore any unknown manifest entry that indicates the second segment.

Preferably, the method comprises sending by the streaming client a request for the second segment or the third segment of the stream associated with the second timestamp based on the indication; and receiving and buffering by the streaming client the second segment or the third segment of the stream associated with the second timestamp.

Thereby, late joiners start retrieving and buffering the main/live stream, so that also late joiners participate in opportunistic ad-hoc multicast delivery of the main/live stream.

Preferably, the method comprises rendering by the streaming client one of the received first segment and second or third segment of the stream in accordance with a least recent one of the respective first timestamp and second timestamp.

"Rendering" as used herein may refer to an act of playout/playback of segments of a stream using a suitable media player.

Thereby, the least recently received segment is rendered. In other words, the received segments associated with the late joiner stream are rendered prior to the received segments associated with the subsequent main/live stream, so that late joiners are allowed to adhere to their own timing and streaming to late joiners also benefits from opportunistic ad-hoc multicast delivery.

Preferably, the rendering of the one of the received first segment and second or third segment of the stream comprises rendering the first segment of the stream associated with the first timestamp, or rendering the buffered second or third segment of the stream associated with the second timestamp.

Preferably, the sending of the request for the first segment of the stream associated with the first timestamp comprises stopping the sending of the request for the first segment in response to the rendering of the one of the received first segment and second or third segment involving the rendering of the buffered second or third segment of the stream.

"Stopping" as used herein may refer to not sending any further request for a segment of the concerned stream.

Thereby, retrieving first segments of the late joiner stream is discontinued when rendering of second or third segments of the main/live stream associated commences, so that an efficient retrieval of the video streaming session is accomplished, wherein every segment of the video streaming session is retrieved only once.

A second aspect of the present disclosure provides a device configured to operate as a user node. The device comprises a streaming client operable to perform the method of the first aspect or any of its embodiments.

A "user node" as used herein may refer to a node being connected to a network and being controlled/operated by a user.

Thereby, the particular advantages mentioned in connection with the various embodiments of the method of the first aspect apply similarly to the corresponding embodiments of the device of the second aspect.

A third aspect of the present disclosure provides a device configured to operate as a network node. The device comprises a streaming client operable to perform the method of the first aspect or any of its embodiments.

A "network node" as used herein may refer to an in-network node being controlled/operated by an operator of the network, or by a provider of a content service. Network nodes may be programmable in terms of forwarding and/or processing of network traffic, for example by means of virtual machines (VMs) being configured to instantiate/expose virtualized network functions (VNF) and/or other pertinent software components.

Thereby, the particular advantages mentioned in connection with the various embodiments of the method of the first aspect apply similarly to the corresponding embodiments of the device of the third aspect.

Thereby, the device operating as a network node may act as an in-network service function, i.e., an in-network cache. In other words, the streaming client of the in-network cache may retrieve both the late joiner stream and the main/live stream of a video streaming session on behalf of unmodified streaming clients, who otherwise retrieve the latecomer stream only and simply ignore the indication of the main/live stream. The in-network cache may further buffer the main/live stream and deliver the late joiner stream and subsequently the main/live stream to requesting unmodified streaming clients in accordance with a least recent one of the involved timestamps. Thus, both the main/live and late joiner streams may benefit from opportunistic ad-hoc multicast delivery when unmodified streaming clients are present.

A fourth aspect of the present disclosure provides a method of operating a streaming server. The method comprises receiving a request for a first segment of a stream associated with a first timestamp; and in response to the first timestamp being outside a given time interval including a second timestamp, sending an indication of a second segment or a third segment of the stream associated with the second timestamp and sending the first segment of the stream associated with the first timestamp.

Thereby, and in view of the corresponding features of the methods of the first and fourth aspects, the particular advantages mentioned in connection with the various embodiments of the method of the first aspect apply similarly to the corresponding embodiments of the method of the fourth aspect.

Preferably, the method comprises, in response to the first timestamp being within the given time interval, sending the second segment or the third segment of the stream associated with the second timestamp.

Preferably, the sending of the indication comprises sending the indication encoded in one part of a HTTP multipart message and sending the first segment of the stream associated with the first timestamp encoded in another part of the HTTP multipart message.

Preferably, the sending of the indication comprises sending the indication in a manifest file of the stream.

Preferably, the sending of the indication further comprises sending an identifier of the second segment of the stream associated with the second timestamp, or an identifier of a third segment of the stream following the second segment of the stream associated with the second timestamp.

An "identifier" may refer to an information by which an identity can be established. As used herein, an "identifier" may refer to a sequential number of a segment of a stream, for example.

Thereby, the second or third segment of the stream relating to the main/live stream may be indicated in a data-efficient manner.

Preferably, the method comprises sending the identifier of the second segment or the third segment in dependence of a temporal concurrence of the request for the first segment of the stream associated with the first timestamp and the given time interval.

A "temporal concurrence" as used herein may refer to a progress of the first timestamp t₁ in relation to the given time interval [t_{M}; t_{M}+t_{S}[. For example, an estimate of a round-trip time (RTT) between the requesting streaming client and the prompted streaming server may be used to decide on this progress. In particular, it may be left for implementation to decide on the two choices dynamically.

Preferably, the method comprises deploying a device according to the third aspect or any of its embodiments on-demand.

"Deploying" as used herein may refer to an act of instantiation of a device, for example by instantiating/exposing VNFs and/or other pertinent software components on a VM of a network node.

Thereby, the device requires computing and/or storage resources only when appropriate.

Preferably, the deploying of the device comprises deploying the device using a Network Functions Virtualization Management ANd Orchestration (NFV MANO) framework.

An NFV MANO framework as used herein may refer to an architectural framework for management and orchestration of VNFs and other pertinent software components being instantiated/exposed on VMs of network nodes.

Preferably, the deploying of the device further comprises triggering the deploying of the device in response to the streaming server receiving the request for the first segment of the stream associated with the first timestamp and the first timestamp being outside the given time interval.

"Triggering" as used herein may refer to an act of initiating, starting, or causing to begin, a deployment of a device.

Preferably, the deploying of the device further comprises placing the device within the network in accordance with applicable path selection criteria of a path computation mechanism of the network.

"Placing" as used herein may refer to an act of designating a particular node in a network for deploying a device.

A "path computation mechanism" as used herein may refer to a functional entity in a management or control plane of a network being responsible for making constraint-based path computation (i.e., routing) decisions for conveying data between a source node and a destination node. Constraint-based path computation may involve path selection criteria/constraints such as Quality of Service (QoS), policy, availability, and/or cost. Examples of path computation mechanisms comprise routing algorithms of Interior Gateway Protocols (IGPs), or the Path Computation Element (PCE) concept.

Thereby, the device may be deployed as conveniently, as dependably, and/or as resource-efficiently as possible. In particular, placing the device relatively close to streaming clients may reduce a bandwidth demand of localized content distribution.

Preferably, the deploying of the device further comprises registering the streaming client of the device under a same service name as the streaming server.

"Registering" as used herein may refer to an act of enrolling a service name in a publically viewable register.

Thereby, the streaming client of the (in-)network node may effectively off-load the streaming server by acting as a proxy for a number of streaming clients, in particular unmodified streaming clients, of user nodes.

A fifth aspect of the present disclosure provides a device configured to operate as a further network node. The device comprises a streaming server operable to perform the method of the fourth aspect or any of its embodiments.

Thereby, the particular advantages mentioned in connection with the various embodiments of the method of the fourth aspect apply similarly to the corresponding embodiments of the device of the fifth aspect.

A sixth aspect of the present disclosure provides a computer program. The computer program comprises executable instructions which, when executed by a processor, cause the processor to perform the method of the first aspect or any of its embodiments, or the method of the fourth aspect or any of its embodiments.

Thereby, the particular advantages mentioned in connection with the various embodiments of the method of the first aspect or fourth aspect apply similarly to the corresponding embodiments of the computer program of the sixth aspect.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects will be explained in the following description of various embodiments in relation to the enclosed drawings, in which
- FIG. 1: illustrates an exemplary network environment for various aspects of the present disclosure.
- FIGs. 2, 3: illustrate flow diagrams of methods according to first and fourth aspects of the present disclosure;
- FIGs. 4, 5: illustrate encoding schemes according to various embodiments of the methods according to the first and fourth aspects of the present disclosure.
- FIGs. 6, 7, 8: illustrate devices 6; 7; 8 according to second, third and fifth aspects of the present disclosure.

### DETAILED DESCRIPTION OF EMBODIMENTS

The above described aspects will now be described with respect to various embodiments illustrated in the enclosed drawings.

The features of these embodiments may be combined with each other unless specified otherwise.

The drawings are to be regarded as being schematic representations and elements illustrated in the drawings are not necessarily shown to scale. Rather, the various elements are represented such that their function and general purpose become apparent to a person skilled in the art.

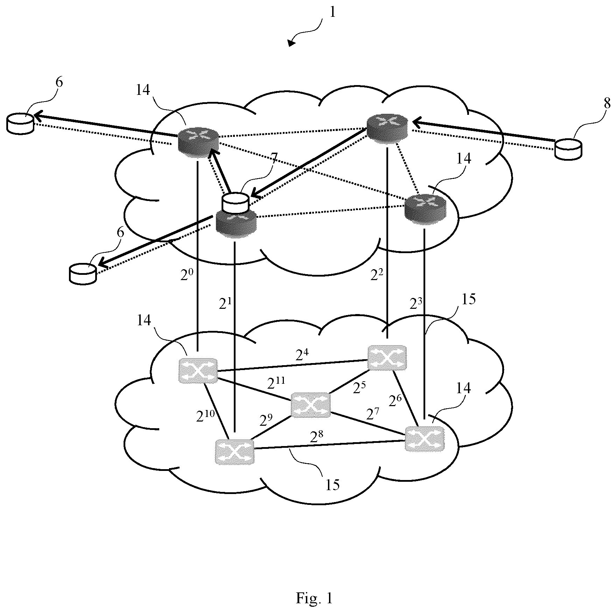

FIG. 1 illustrates an exemplary network environment for various aspects of the present disclosure.

The network 1 comprises nodes 14 and links 15, and each link 15 interconnects two of the nodes 14 of the network 1.

As used herein, a node of a network may refer to a network entity being configured to perform forwarding of traffic via incident links.

The nodes 14 may comprise Layer 2 forwarding technology, and may further be programmable in accordance with a Software-Defined Networking (SDN) technology.

As used herein, SDN may refer to a network management concept involving programmable network configuration in order to improve network performance and monitoring. For example, SDN may be realized based on protocols such as OpenFlow, for example.

The nodes 14 may be operable as forwarding nodes of the network 1. Additionally, the nodes 14 may be operable as endpoints (indicated by the pillar-shaped shaded nodes 14 in an upper portion of FIG. 1).

As used herein, an endpoint may refer to a node of a network being configured to take local registration of content services, receive and maintain state information, and take routing decisions based on said state information.

The nodes 14 and links 15 may collectively form a virtual LAN (VLAN). When utilizing VLAN technology, registered services may be limited to such VLANs, which ensures routing scalability.

Taking routing decisions may involve computing a forwarding path based on said state information.

According to the specific concept of Layer 2 multicast over path-based forwarding, a binary encoding of unicast path information is provided. To this end, the links 15 may be associated with respective link bit vectors.

As used herein, a link bit vector may refer to a bit vector in which each of the links 15 of the network 1 occupies a respective dedicated bit position *k* ∈ *[0;K-1]* and where *K* denotes a total number of links 15 of the network 1.

In FIG. 1, each of the K=12 links 15 of the network 1 has its respective dedicated bit position k set, such that the respective link bit vectors have decimal values of 2*⁰* to 2^{*K*-*1*}(= 2*¹¹*).

In connection with Layer 2 multicast over path-based forwarding, unicast path information may be formed by binary OR combination of the link bit vectors of the links 15 associated with a computed forwarding path, and multicast path information may be established through binary OR combination of a plural of unicast path information.

Such path information may serve as forwarding information.

As used herein, forwarding information may refer to information carried in a header of a packet defining an acyclic directed graph, such as a path or a tree structure, along which the packet is to be forwarded by involved forwarding nodes 14 of the network 1.

The network 1 deploys the concept of Layer 2 multicast over path-based forwarding, which allows for responding to multiple concurrent unicast requests for a same content through an opportunistic ad-hoc multicast delivery of a single HTTP response over Layer 2, without requiring explicit multicast tree state to be maintained in intermediate nodes of the underlying Layer 2 network.

With reference to FIG. 1, an exemplary multicast delivery is represented as an acyclic directed graph (indicated by bold arrows in the upper portion of FIG. 1) representing a tree structure having a device 8 according to a fifth aspect as a root and devices 6 according to a second aspect as leaves.

The device 8 comprises a streaming server 80 and is controlled/operated by an operator of the network 1, or by a provider of the content service, if applicable.

The devices 6 comprise respective streaming clients 60, which are controlled/operated by respective users.

The exemplary multicast delivery of FIG. 1 further features a device 7 according to a third aspect comprising a streaming client 60 and being controlled/operated by an operator of the network 1, or by a provider of the content service, if applicable.

The devices 6, 7, 8 will be revisited in more detail in connection with the remainder of the figures.

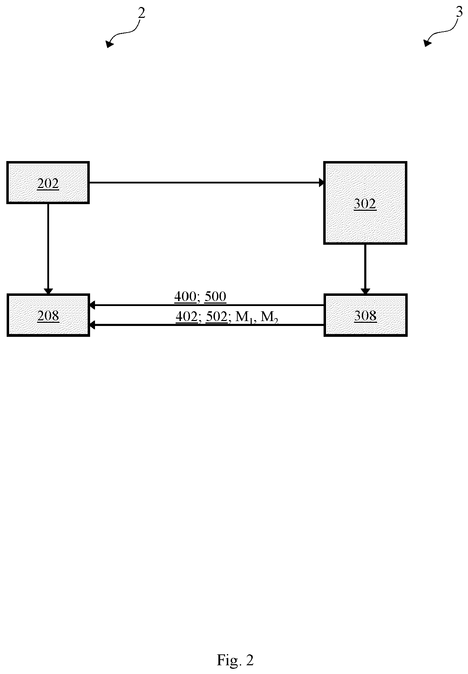

FIG. 2 illustrates a flow diagram of the methods 2, 3 according to the first and fourth aspects of the present disclosure.

In the flow diagram of FIG. 2, horizontal arrows indicate message flow and vertical arrows denote program flow.

The steps of the method 2 appearing to the left of Fig. 2 are for operating the streaming clients 60 of the devices 6, 7 shown in FIG. 1, and the steps of the method 3 appearing to the right of Fig. 2 are for operating the streaming server 80 of the device 8 of FIG. 1.

Initially, the method 2 comprises sending 202 by the streaming client 60 a request for a first segment 400; 500 of a stream associated with a first timestamp t₁.

Corresponding to this, the method 3 comprises receiving 302 by the streaming server 80 the request for the first segment 400; 500 of the stream associated with the first timestamp t₁.

The methods 2, 3 make provisions for late joining streaming clients 60, i.e., so-called late joiners, requesting segments of the stream associated with the first timestamp t₁ of the stream, which may be less recent than a (second) timestamp t_{M} of the stream, such as a live timestamp of the stream.

More specifically, if the first timestamp t₁ underlying the request does not fall within a given time interval [t_{M}; t_{M}+t_{S}[ including the more recent second timestamp t_{M}, the late joiner is advised that segments of the stream associated with the more recent second timestamp t_{M} are available.

The given time interval [t_{M}; t_{M}+t_{S}[ allows for catching and/or synchronizing one or more requests for segments of the stream into a single Layer 2 multicast response. As will be appreciated, a plurality of requesting streaming clients 60 may be synchronized according to the time interval ts, which may correspond to one half of a time duration of the segments of the stream, for example.

Accordingly, in response to the first timestamp t₁ being outside the given time interval [t_{M}; t_{M}+t_{S}[ including the (more recent) second timestamp t_{M}, the method 3 comprises sending 308 an indication 402; 502; M₁, M₂ of a second segment 300₁ or a third segment 300₂ of the stream associated with the (more recent) second timestamp t_{M}, and sending 308 the first segment 400; 500 of the stream associated with the (less recent) first timestamp t₁.

Corresponding to this, the method 2 comprises, in response to the sending of the request: receiving 208 the indication 402; 502; M₁, M₂ of the second segment 300₁ or the third segment 300₂ of the stream associated with the (more recent) second timestamp t_{M}, and receiving 208 the first segment 400; 500 of the stream associated with the (less recent) first timestamp t₁.

Thereby, late joiners are provided with a notion of a 'main/live video stream' and enabled to retrieve (and buffer) the same video streaming session starting from different timestamps.

Thereby, late joiners are allowed to adhere to their own timing by retrieving (and rendering) the video streaming session starting from the first timestamp t₁, and by being enabled to retrieve (and buffer) the same video streaming session starting from the second timestamp t_{M}. As a result, late joiners are not forced to join the main/live video stream and to miss out on the parts being missed.

Thereby, both main/live stream and late joiner streams may benefit from opportunistic ad-hoc multicast delivery. In other words, the underlying network 1 benefits from a multicasting gain of each of the late joiner stream and the main/live stream. More specifically, streaming to participants joining the video streaming session substantially concurrently with the second timestamp t_{M} relating to the main/live stream benefits from multicast delivery through a single multicast response to the individual unicast requests of these participants for the same content. Likewise, streaming to late joiners joining the same video streaming session substantially off the second timestamp t_{M} also benefits from multicast delivery through a single multicast response to the individual unicast requests of these late joiners for the same content.

After completion of the receiving 208 step, the program flow may reiterate the sending 202 step in order to request the next segment of the late joiner stream. The iterative retrieval of sequential segments of the late joiner stream may be implemented as a separate late joiner stream retrieval thread in a multi-threading environment.

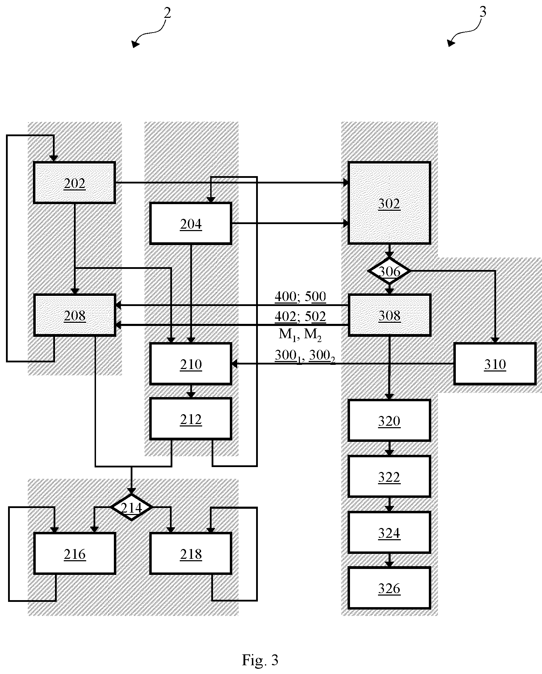

Alternatively, the program flow may proceed to, or enable, a rendering 216 step (see FIG. 3 below). The rendering 216 of sequential segments of the late joiner stream may be implemented as part of a separate playout thread in the multi-threading environment.

According to further embodiments, more than one iterative retrieval of sequential segments of the late joiner stream may be implemented, resulting in more than one separate late joiner stream retrieval thread in a multi-threading environment.

For example, a second late joiner requesting segments of the streaming session associated with a even further less recent first timestamp t₂ < t₁ < t_{M} may be advised by the prompted streaming server 80 that segments of the main/live stream associated with the more recent second timestamp t_{M} as well as segments of the late joiner stream associated with the less recent first timestamp t₁ are available. The iterative retrieval of sequential segments of the second late joiner stream may be implemented as a further separate late joiner stream retrieval thread in a multi-threading environment.

Thereby, streaming to late joiners joining the same video streaming session substantially off the second timestamp t_{M} also benefits from multicast delivery through creating "buckets" of late joiners, each bucket receiving a single multicast response to the individual unicast requests of the late joiners of the respective bucket for the same content. In other words, the underlying network 1 benefits from a multicasting gain of each of the late joiner streams and the main/live stream. Each of the late joiner streams will cease to be retrieved when the retrieved segments will reach those of a temporally following late joiner stream, or ultimately those of the temporally following main/live stream.

FIG. 3 illustrates a more detailed flow diagram of the method 2, 3 according to the first and fourth aspects of the present disclosure.

As in the flow diagram of FIG. 2, message flows and program flows are indicated by horizontal and vertical arrows, respectively.

The steps of the method 2 appearing to the left of Fig. 2 are for operating the streaming clients 60 of the devices 6, 7 shown in FIG. 1, and the steps of the method 3 appearing to the right of Fig. 2 are for operating the streaming server 80 of the device 8 of FIG. 1.

For discussion of the steps 202, 208, 302 and 308, reference is made to the description of FIG. 2 above.

FIG. 3 shows that the method 3 may involve a case distinction 306 of whether the (less recent) first timestamp t₁ is within the given time interval [t_{M}; t_{M}+t_{S}[ or not.

As already mentioned in connection with FIG. 2 above, the method 3 comprises the sending 308 step in response to the (less recent) first timestamp t₁ being *outside* the given time interval [t_{M}; t_{M}+t_{S}[ including the (more recent) second timestamp t_{M}.

In this connection and according to embodiments, the streaming server 80 may be more specific as to the particular segment 300₁, 300₂ being indicated.

Namely, the sending 308 of the indication 402; 502; M₁, M₂ may comprise sending 308 an identifier M₁ of the second segment 300₁ of the stream associated with the second timestamp t_{M}, or an identifier M₂ of the third segment 300₂ of the stream following the second segment 300₁ of the stream associated with the second timestamp t_{M}.

Thereby, the second or third segment of the stream relating to the main/live stream may be indicated in a data-efficient manner.

The sending 308 of the identifier 402; 502; M₁, M₂ of the second segment 300₁ or the third segment 300₂ may depend on a temporal concurrence of the request for the first segment 400; 500 of the stream associated with the first timestamp t₁ and the given time interval [t_{M}; t_{M}+t_{S}[.

In other words, the temporal concurrence relates to a progress of the first timestamp t₁ in relation to the given time interval [t_{M}; t_{M}+t_{S}[. For example, an estimate of a RTT between the requesting streaming client and the prompted streaming server may be used to decide on this progress. In particular, it may be left for implementation to decide in the two choices dynamically.

Both the second segment 300₁ and the third segment 300₂ of the stream are known to the streaming server 80 due to maintaining the current response state.

Thereby, a latecomer's retrieval of the stream associated with the (more recent) second timestamp t_{M} may be aligned to the at least one streaming client 60 already retrieving the same stream.

According to further embodiments, the streaming server 80 may deliver the main/live stream promptly.

That is to say, the method 3 may further comprise, in response to the (less recent) first timestamp t₁ being *within* the given time interval [t_{M}; t_{M}+t_{S}[, sending 310 the second segment 300₁ or a third segment 300₂ of the stream associated with the (more recent) second timestamp t_{M}.

In a corresponding step, the method 2 may comprise, in response to the (less recent) first timestamp t₁ being within the given time interval [t_{M}; t_{M}+t_{S}[, receiving 210 the second segment 300₁ or the third segment 300₂ of the stream associated with the (more recent) second timestamp t_{M}.

Thereby, participants joining the video streaming session substantially concurrently with the second timestamp t_{M} relating to the main/live stream retrieve the main/live stream right away, thus participating in opportunistic ad-hoc multicast delivery of the main/live stream.

According to further embodiments, the streaming server 80 may deliver the main/live stream on demand of the streaming clients 60, based on the indication 402; 502; M₁, M₂.

To this end, the streaming client 60 may send (204) a request for the second segment 300₁ or the third segment 300₂ of the stream associated with the second timestamp t_{M} based on the indication 402; 502; M₁, M₂; and receive (210) and buffer (212) the second segment 300₁ or the third segment 300₂ of the stream associated with the second timestamp t_{M}.

Thereby, late joiners start retrieving and buffering the main/live stream, so that also late joiners participate in opportunistic ad-hoc multicast delivery of the main/live stream.

After completion of the buffering 212 step, the program flow may reiterate the sending 204 step in order to request the next segment of the main/live stream. The iterative retrieval of sequential segments of the main/live stream may be implemented as a separate main/live stream retrieval thread in a multi-threading environment, which may not be forked if a buffering of segments of the main/live stream is projected to exceed a given buffer capacity threshold. In such case, the streaming client 60 may decide to not retrieve the main/live stream at all.

Alternatively, the program flow may proceed to, or enable, a rendering 218 step. The rendering 218 of sequential segments of the main/live stream may be implemented as part of the separate playout thread in the multi-threading environment.

According to further embodiments, the sending 308 of the indication 402; 502; M₁, M₂ may involve different encodings.

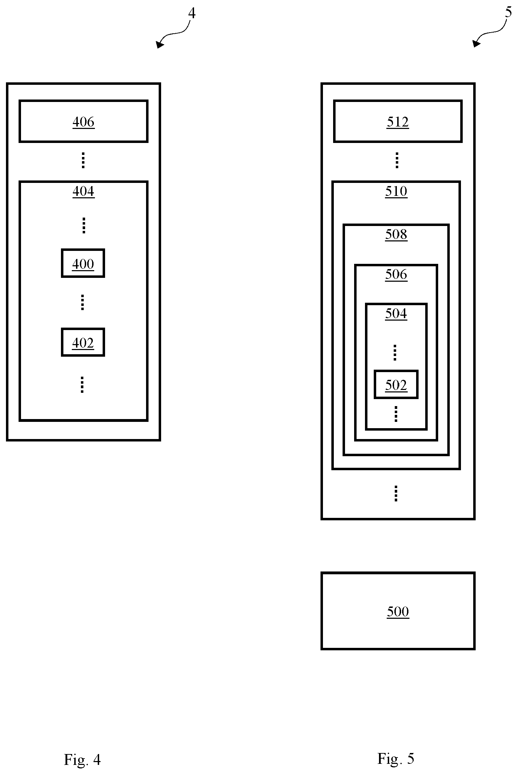

The sending 308 of the indication 402; 502; M₁, M₂ may comprise sending 308 the indication 402, M₁, M₂ encoded in one part of a HTTP multipart message 4 (see FIG. 4) and sending 308 the first segment 400 of the stream associated with the (less recent) first timestamp t₁ encoded in another part of the HTTP multipart message 4.

In a corresponding step, the receiving 208 of the indication 402; 502; M₁, M₂ may comprise receiving 208 the indication 402, M₁, M₂ encoded in one part of a HTTP multipart message 4 and receiving 208 the first segment 400 of the stream associated with the first timestamp t₁ in another part of the HTTP multipart message 4.

Thereby, the indication of the second segment relating to the main/live stream may be communicated in a backwards-compatible manner, since HTTP multipart message encoding is standardized and an unmodified streaming client will simply ignore any unknown multi-form body entry that indicates the second segment.

Alternatively, the sending 308 of the indication 402; 502; M₁, M₂ may comprise sending 308 the indication 502; M₁, M₂ in a manifest file 5 (see FIG. 5) of the stream. The manifest file 5 may be sent together with the first segment 400; 500 of the stream associated with the first timestamp t₁.

In a corresponding step, the receiving 208 of the indication 402; 502; M₁, M₂ may comprise receiving 208 the indication 502, M₁, M₂ encoded in the manifest file 5 of the stream.

Thereby, the indication of the second segment relating to the main/live stream may be communicated in another backwards-compatible manner, since manifest file encoding is standardized and an unmodified streaming client will simply ignore any unknown manifest entry that indicates the second segment.

According to further embodiments, the streaming clients 60 may start a playout of received segments relating to the late joiner stream or the main/live stream.

The method 2 may thus comprise rendering 216, 218 one of the received first segment 400; 500 and second or third segment 300₁; 300₂ of the stream in accordance with the least recent one of the respective first timestamp and second timestamp.

FIG. 3 shows a case distinction 214 regarding which one of the respective first timestamp t₁ and second timestamp t_{M} is the least recent one.

The rendering 216, 218 of the one of the received first segment 400; 500 and second or third segment 300₁; 300₂ of the stream may comprise rendering 216 the first segment 400; 500 of the stream associated with the first timestamp t1, as long as a (less recent) first timestamp t₁ is available for playout.

However, the rendering 216, 218 of the one of the received first segment 400; 500 and second or third segment 300₁; 300₂ of the stream may comprise rendering 218 the buffered second or third segment 300₁; 300₂ of the stream associated with the second timestamp t_{M}, when a (less recent) first timestamp t₁ is no longer available for playout.

Thereby, the least recently received segment is rendered. In other words, the received segments associated with the late joiner stream are rendered prior to the received segments associated with the subsequent main/live stream, so that late joiners are allowed to adhere to their own timing and streaming to late joiners also benefits from opportunistic ad-hoc multicast delivery.

According to further embodiments, the streaming clients 60 may suspend the retrieval of the late joiner stream when starting the playout of the main/live stream.

Accordingly, the sending 202 of the request for the first segment 400; 500 of the stream associated with the first timestamp t₁ may comprise stopping the sending 202 of the request for the first segment 400; 500 in response to the rendering 216, 218 step involving the rendering 218 of the buffered second or third segment 300₁; 300₂ of the stream.

Thereby, retrieving first segments of the late joiner stream is discontinued when rendering of second or third segments of the main/live stream associated commences, so that an efficient retrieval of the video streaming session is accomplishes, wherein every segment of the video streaming session is retrieved only once.

According to further embodiments, the streaming server 80 may deploy an in-network cache as appropriate.

To accomplish this, the method 3 may comprise deploying 326 a device 7 according to the third aspect on-demand. In particular, the deploying 326 of the device 7 may involve using an NFV MANO framework.

As described previously, the device 7 may act as an in-network service function, i.e., an in-network cache, on behalf of unmodified streaming clients.

Thereby, the device 7 requires computing and/or storage resources only when needed.

Thereby, both the main/live and late joiner streams may benefit from opportunistic ad-hoc multicast delivery when unmodified streaming clients are present.

The device 7 should act as an in-network cache on behalf of unmodified streaming clients, so that a demand for deploying 326 the device 7 is associated with unmodified streaming clients requesting retrieval of a late joiner stream.

Thus, the deploying 326 of the device 7 may further comprise triggering 320 the deploying 326 of the device 7 in response to the streaming server 80 receiving 302 the request for the first segment 400; 500 of the stream associated with the first timestamp t₁ and the first timestamp t₁ being outside the given time interval [t_{M}; t_{M}+t_{S}[. Such deploying 326 may be triggered by the streaming server 80 operating according to the method 3, or by a content management system (CMS) which governs a number of individual streaming servers 80 and which would have knowledge of late joiner streams, e.g., through a control channel from a respective streaming client 60 to the CMS when selecting a video to watch.

The deploying 326 of the device 7 may further comprise placing 322 the device 7 within the network in accordance with applicable path selection criteria of a path computation mechanism of the network. When applying a shortest path criterion, any in-network node 7 should reside closer to the respective streaming client 60 in terms of a count of forwarding links 15.

Thereby, the device may be deployed as conveniently, as dependably, and/or as resource-efficiently as possible. In particular, placing the device relatively close to streaming clients may reduce a bandwidth demand of localized content distribution.

The deploying 326 of the device 7 may further comprise registering 324 the streaming client 60 of the device 7 under a same service name as the streaming server 80. In particular, this could be a Domain Name Service (DNS) name. Alternatively, the CMS may utilize specific names for streaming servers 80 that are being signaled to the respective streaming client 60 upon selection of a video, in which case the CMS may select specific servers, including an in-network node 7 as already mentioned.

Thereby, the streaming client of the (in-)network node may effectively off-load the streaming server by acting as a proxy for a number of streaming clients, in particular unmodified streaming clients, of user nodes.

FIGs. 4, 5 illustrate encoding schemes 4; 5 according to various embodiments of the methods 2; 3 according to the first and fourth aspects of the present disclosure.

According to the embodiment shown in Fig. 4, the sending 308 of the indication 402; 502; M₁, M₂ may comprise sending 308 the indication 402, M₁, M₂ encoded in an HTTP multipart message 4.

In the example of FIG. 4, the HTTP multipart message 4 includes a portion 406 comprising an HTTP header, and a portion 404 comprising message parts 400, 402.

The indication 402, M₁, M₂ may be encoded in one part 400 of the HTTP multipart message 4, and the first segment 400 of the stream associated with the first timestamp t₁ may be encoded in another part 402 of the HTTP multipart message 4.

In a corresponding step, the receiving 208 of the indication 402; 502; M₁, M₂ may comprise receiving 208 the indication 402, M₁, M₂ encoded in one part of a HTTP multipart message 4 and receiving 208 the first segment 400 of the stream associated with the first timestamp t₁ in another part of the HTTP multipart message 4.

Thereby, the indication of the second segment relating to the main/live stream may be communicated in a backwards-compatible manner, since HTTP multipart message encoding is standardized and an unmodified streaming client will simply ignore any unknown multi-form body entry that indicates the second segment.

According to the embodiment shown in Fig. 5, the sending 308 of the indication 402; 502; M₁, M₂ may comprise sending 308 the indication 502; M₁, M₂ in a manifest file 5 of the stream.

The manifest file 5 of FIG. 5 substantially conforms with the MPEG-DASH Media Presentation Description (MPD) format. Such a manifest file has an XML encoding and identifies, inter alia, streaming content partitioned into indexed (media) segments.

The manifest file 5 includes a portion 512 comprising an MPD header and a portion 510 comprising a number of periods of a stream, each describing a part of the streaming content with a start time and duration, such as scenes or chapters. According to a nested approach, each period may in turn include a portion 508 comprising a number of adaptation sets, each comprising a number of video and audio streams. Each adaptation set may in turn include a portion 506 comprising a number of representations (i.e., encodings) of the media streams. Each representation may in turn include a portion 504 comprising a number of indications (i.e., URLs) of segments of the stream.

The second segment 500 of the stream associated with the first timestamp t_{M} may be encoded as one of the number of indications.

The indication 502; M₁, M₂ may also be encoded in the portion 504. In case of MPEG-DASH, this may involve SegmentTimeline tags, for example. Alternatively, a tag specific to late joiner information may be provided.

The manifest file 5 may be sent together with the first segment 500 of the stream associated with the first timestamp t₁.

In a corresponding step, the receiving 208 of the indication 402; 502; M₁, M₂ may comprise receiving 208 the indication 502, M₁, M₂ encoded in the manifest file 5 of the stream. The manifest file 5 may be received together with the first segment 500 of the stream associated with the first timestamp t₁.

Thereby, the indication of the second segment relating to the main/live stream may be communicated in another backwards-compatible manner, since manifest file encoding is standardized and an unmodified streaming client will simply ignore any unknown manifest entry that indicates the second segment.

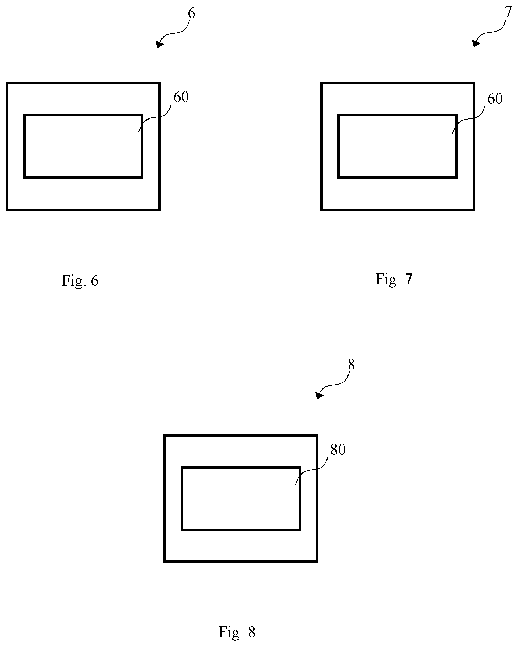

FIGs. 6, 7, 8 illustrate devices 6; 7; 8 according to second, third and fifth aspects of the present disclosure.

FIG. 6 shows the device 6 configured to operate as a user node, comprising a streaming client 60 operable to perform the method 2 according to the first aspect.

Thereby, the particular advantages mentioned in connection with the various embodiments of the method of the first aspect apply similarly to the corresponding embodiments of the device of the second aspect.

FIG. 7 shows the device 7 configured to operate as a network node, which also comprises a streaming client 60 operable to perform the method 2 according to the first aspect.

Thereby, the particular advantages mentioned in connection with the various embodiments of the method of the first aspect apply similarly to the corresponding embodiments of the device of the third aspect.

FIG. 8 shows the device 8 configured to operate as a further network node, comprising a streaming server 80 operable to perform the method 3 according to the fourth aspect.

Thereby, the particular advantages mentioned in connection with the various embodiments of the method of the fourth aspect apply similarly to the corresponding embodiments of the device of the fifth aspect.

The devices of the second, third or fifth aspects may respectively comprise a processor or processing circuitry, which may in turn comprise hardware and/or the processing circuitry which may be controlled by software. The hardware may comprise analog circuitry or digital circuitry, or both analog and digital circuitry. The digital circuitry may comprise components such as application-specific integrated circuits (ASICs), field-programmable gate arrays (FPGAs), digital signal processors (DSPs), or multi-purpose processors.

The devices of the second, third or fifth aspects may further comprise memory circuitry (not shown). The memory circuitry may comprise a non-transitory storage medium (not shown) being configured to store the computer program of the sixth aspect.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A method (2) of operating a streaming client (60), the method (2) comprising
sending (202) by the streaming client (60), to a streaming server (80), a request for a first segment (400; 500) of a stream associated with a first timestamp (t₁); and in response to the sending of the request: upon
determining by the streaming server (80) that the first timestamp (t₁) is outside a given time interval [t_{M}; t_{M}+t_{S}[ that includes a second timestamp (t_{M}),
receiving (208) by the streaming client (60), from the streaming server (80), an indication (402; 502; M₁, M₂) serving to identify a second segment (300₁) or a third segment (300₂) of the stream associated with a second timestamp (t_{M}); and
receiving (208) by the streaming client (60), from the streaming server (80), the first segment (400; 500) of the stream associated with the first timestamp (t₁).

2. The method (2) of claim 1, comprising
sending the indication (402; 502; M₁, M₂) by a streaming server (80) in response to the request for the first segment (400, 500) and upon determining that the first timestamp (t₁) is outside the given time interval [t_{M}; t_{M}+t_{S}[ that includes the second timestamp (t_{M}).

3. The method (2) of claim 1 or claim 2, wherein the second segment (300₁) or the third segment (300₂) of the stream associated with the second timestamp (t_{M}) is requested by at least one further streaming client (60).

4. The method (2) of one of the claims 1 to 3, wherein the receiving (208) of the indication (402; 502; M₁, M₂) comprises
receiving (208) the indication (402, M₁, M₂) encoded in one part of a HTTP multipart message (4) and receiving (208) the first segment (400) of the stream associated with the first timestamp (t₁) in another part of the HTTP multipart message (4).

5. The method (2) of one of the claims 1 to 3, wherein the receiving (208) of the indication (402; 502; M₁, M₂) comprises
receiving (208) the indication (502, M₁, M₂) encoded in a manifest file (5) of the stream.

6. The method (2) of one of the claims 1 to 5, comprising
sending (204) by the streaming client (60) a request for the second segment (300₁) or the third segment (300₂) of the stream associated with the second timestamp (t_{M}) based on the indication (402; 502; M₁, M₂); and
receiving (210) and buffering (212) by the streaming client (60) the second segment (300₁) or the third segment (300₂) of the stream associated with the second timestamp (t_{M}).

7. The method (2) of claim 6, comprising
rendering (214, 116, 118) by the streaming client (60) one of the received first segment (400; 500) and second or third segment (300₁; 300₂) of the stream in accordance with a least recent one of the respective first timestamp and second timestamp.

8. The method (2) of claim 7, wherein the rendering (214, 116, 118) of the one of the received first segment (400; 500) and second or third segment (300₁; 300₂) of the stream comprises rendering (216) the first segment (400; 500) of the stream associated with the first timestamp (t₁), or rendering (218) the buffered second or third segment (300₁; 300₂) of the stream associated with the second timestamp (t_{M}).

9. The method (2) of one of the claims 6 to 8, wherein the sending (202) of the request for the first segment (400; 500) of the stream associated with the first timestamp (t₁) comprises stopping the sending (202) of the request for the first segment (400; 500) in response to the rendering (216) of the one of the received first segment (400; 500) and second or third segment (300₁; 300₂) involving the rendering (208) of the buffered second or third segment (300₁; 300₂) of the stream.

10. A device (6) configured to operate as a user node, comprising
a streaming client (60) operable to perform the method (2) of one of the claims 1 - 9.

11. A device (7) configured to operate as a network node, comprising
a streaming client (60) operable to perform the method (2) of one of the claims 1 - 9.

12. A method (3) of operating a streaming server (80), the method (3) comprising
receiving (302) by the streaming server (80) a request, from a streaming client (60), for a first segment (400; 500) of a stream associated with a first timestamp (t₁); and
in response to the streaming server (80) determining that the first timestamp (t₁) is outside a given time interval [t_{M}; t_{M}+_{S} [ that includes a second timestamp (t_{M}), sending (308) by the streaming server (80), to the streaming client (60), an indication (402; 502; M₁, M₂) serving to identify a second segment (300₁) or a third segment (300₂) of the stream associated with the second timestamp (t_{M}) and sending (308), to the streaming client (60), the first segment (400; 500) of the stream associated with the first timestamp (t₁).

13. The method (3) of claim 12, further comprising
in response to the first timestamp (t₁) being within the given time interval [t_{M}; t_{M}+t_{S}[, sending (310) by the streaming server (80) the second segment (300₁) or the third segment (300₂) of the stream associated with the second timestamp (t_{M}).

14. The method (3) of claim 12 or claim 13, wherein the sending (308) of the indication (402; 502; M₁, M₂) comprises
sending (308) the indication (402, M₁, M₂) encoded in one part of a HTTP multipart message (4) and sending (308) the first segment (400) of the stream associated with the first timestamp (t₁) encoded in another part of the HTTP multipart message (4).

15. The method (3) of claim 12 or claim 13, wherein the sending (308) of the indication (402; 502; M₁, M2) comprises
sending (308) the indication (502; M₁, M₂) in a manifest file (5) of the stream.

## Patentansprüche

1. Verfahren (2) zum Betreiben eines Streaming-Clients (60), wobei das Verfahren (2) umfasst
Senden (202), durch den Streaming-Client (60), an einen Streaming-Server (80), einer Anforderung für ein erstes Segment (400; 500) eines Streams, der einem ersten Zeitstempel (t₁) zugeordnet ist; und als Reaktion auf das Senden der Anforderung: bei einem Bestimmen durch den Streaming-Server (80), dass der erste Zeitstempel (t₁) außerhalb eines gegebenen Zeitintervalls [t_{M};t_{M}+t_{S}[, das einen zweiten Zeitstempel (t_{M}) einschließt, liegt,
Empfangen (208), durch den Streaming-Client (60), von dem Streaming-Server (80), einer Angabe (402; 502; M₁, M₂), die dazu dient, ein zweites Segment (300₁) oder ein drittes Segment (300₂) des Streams, der einem zweiten Zeitstempel (t_{M}) zugeordnet ist, zu identifizieren; und
Empfangen (208), durch den Streaming-Client (60), von dem Streaming-Server (80), des ersten Segments (400; 500) des Streams, der dem ersten Zeitstempel (t₁) zugeordnet ist.

2. Verfahren (2) nach Anspruch 1, das umfasst
Senden der Angabe (402; 502; M₁, M₂) durch einen Streaming-Server (80) als Reaktion auf die Anforderung für das erste Segment (400, 500) und bei dem Bestimmen, dass der erste Zeitstempel (t₁) außerhalb des gegebenen Zeitintervalls [t_{M};t_{M}+tₛ[, das den zweiten Zeitstempel (t_{M}) einschließt, liegt.

3. Verfahren (2) nach Anspruch 1 oder 2, wobei das zweite Segment (300₁) oder das dritte Segment (300₂) des Streams, der dem zweiten Zeitstempel (t_{M}) zugeordnet ist, durch mindestens einen weiteren Streaming-Client (60) angefordert wird.

4. Verfahren (2) nach einem der Ansprüche 1 bis 3, wobei das Empfangen (208) der Angabe (402; 502; M₁, M₂) umfasst
Empfangen (208) der Angabe (402, M₁, M₂), die in einem Teil einer mehrteiligen HTTP-Nachricht (4) codiert ist, und Empfangen (208) des ersten Segments (400) des Streams, der dem ersten Zeitstempel (t₁) zugeordnet ist, in einem anderen Teil der mehrteiligen HTTP-Nachricht (4).

5. Verfahren (2) nach einem der Ansprüche 1 bis 3, wobei das Empfangen (208) der Angabe (402; 502; M₁, M₂) umfasst
Empfangen (208) der Angabe (502, M₁, M₂), die in einer Manifestdatei (5) des Streams codiert ist.

6. Verfahren (2) nach einem der Ansprüche 1 bis 5, das umfasst
Senden (204), durch den Streaming-Client (60), einer Anforderung für das zweite Segment (300₁) oder das dritte Segment (300₂) des Streams, der dem zweiten Zeitstempel (t_{M}) zugeordnet ist, basierend auf der Angabe (402; 502; M₁, M₂); und Empfangen (210) und Zwischenspeichern (212), durch den Streaming-Client (60), des zweiten Segments (300₁) oder des dritten Segments (300₂) des Streams, der dem zweiten Zeitstempel (t_{M}) zugeordnet ist.

7. Verfahren (2) nach Anspruch 6, das umfasst
Rendern (214, 116, 118), durch den Streaming-Client (60), eines von dem empfangenen ersten Segment (400; 500) und dem zweiten oder dritten Segment (300₁; 300₂) des Streams gemäß einem am weitesten zurückliegenden des jeweiligen ersten Zeitstempels und zweiten Zeitstempels.

8. Verfahren (2) nach Anspruch 7, wobei das Rendern (214, 116, 118) des einen von dem empfangenen ersten Segment (400; 500) und dem zweiten oder dritten Segment (300₁; 300₂) des Streams umfasst
Rendern (216) des ersten Segments (400; 500) des Streams, der dem ersten Zeitstempel (t₁) zugeordnet ist, oder
Rendern (218) des zwischengespeicherten zweiten oder dritten Segments (300₁; 300₂) des Streams, der dem zweiten Zeitstempel (t_{M}) zugeordnet ist.

9. Verfahren (2) nach einem der Ansprüche 6 bis 8, wobei das Senden (202) der Anforderung für das erste Segment (400; 500) des Streams, der dem ersten Zeitstempel (t₁) zugeordnet ist, umfasst
Stoppen des Sendens (202) der Anforderung für das erste Segment (400; 500) als Reaktion auf das Rendern (216) des einen von dem empfangenen ersten Segment (400; 500) und dem zweiten oder dritten Segment (300₁; 300₂), was das Rendern (208) des zwischengespeicherten zweiten oder dritten Segments (300₁; 300₂) des Streams beinhaltet.

10. Vorrichtung (6), die konfiguriert ist, um als ein Benutzerknoten betrieben zu werden, die umfasst
einen Streaming-Client (60), der betreibbar ist, um das Verfahren (2) nach einem der Ansprüche 1 bis 9 durchzuführen.

11. Vorrichtung (7), die konfiguriert ist, um als ein Netzwerkknoten betrieben zu werden, die umfasst
einen Streaming-Client (60), der betreibbar ist, um das Verfahren (2) nach einem der Ansprüche 1 bis 9 durchzuführen.

12. Verfahren (3) zum Betreiben eines Streaming-Servers (80), wobei das Verfahren (3) umfasst
Empfangen (302), durch den Streaming-Server (80), einer Anforderung, von einem Streaming-Client (60), für ein erstes Segment (400; 500) eines Streams, der einem ersten Zeitstempel (t₁) zugeordnet ist; und
als Reaktion darauf, dass der Streaming-Server (80) bestimmt, dass der erste Zeitstempel (t₁) außerhalb eines gegebenen Zeitintervalls [t_{M};t_{M}+_{S}[, das einen zweiten Zeitstempel (t_{M}) einschließt, liegt, Senden (308), durch den Streaming-Server (80), an den Streaming-Client (60), einer Angabe (402; 502; M₁, M₂), die dazu dient, ein zweites Segment (300₁) oder ein drittes Segment (300₂) des Streams, der dem zweiten Zeitstempel (t_{M}) zugeordnet ist, zu identifizieren, und Senden (308), an den Streaming-Client (60), des ersten Segments (400; 500) des Streams, der dem ersten Zeitstempel (t₁) zugeordnet ist.

13. Verfahren (3) nach Anspruch 12, das ferner umfasst
als Reaktion darauf, dass der erste Zeitstempel (t₁) innerhalb des gegebenen Zeitintervalls [t_{M};t_{M}+t_{S}[ liegt, Senden (310), durch den Streaming-Server (80), des zweiten Segments (300₁) oder des dritten Segments (300₂) des Streams, der dem zweiten Zeitstempel (t_{M}) zugeordnet ist.

14. Verfahren (3) nach Anspruch 12 oder 13, wobei das Senden (308) der Angabe (402; 502; M₁, M₂) umfasst
Senden (308) der Angabe (402, M₁, M₂), die in einem Teil einer mehrteiligen HTTP-Nachricht (4) codiert ist, und Senden (308) des ersten Segments (400) des Streams, der dem ersten Zeitstempel (t₁) zugeordnet ist, das in einem anderen Teil der mehrteiligen HTTP-Nachricht (4) codiert ist.

15. Verfahren (3) nach Anspruch 12 oder 13, wobei das Senden (308) der Angabe (402; 502; M₁, M₂) umfasst
Senden (308) der Angabe (502; M₁, M₂) in einer Manifestdatei (5) des Streams.

## Revendications

1. Procédé (2) de fonctionnement d'un client de diffusion en continu (60), le procédé (2) comprenant
l'envoi (202), par le client de diffusion en continu (60), à un serveur de diffusion en continu (80), d'une demande pour un premier segment (400 ; 500) d'un flux associé à une première estampille temporelle (t₁) ; et en réponse à l'envoi de la demande :
lorsqu'il est déterminé par le serveur de diffusion en continu (80) que la première estampille temporelle (t₁) est en dehors d'un intervalle de temps donné [t_{M} ;t_{M} + t_{S}[ qui comporte une seconde estampille temporelle (t_{M}),
la réception (208), par le client de diffusion en continu (60), à partir du serveur de diffusion en continu (80), d'une indication (402 ; 502 ; M₁, M₂) permettant d'identifier un deuxième segment (300₁) ou un troisième segment (300₂) du flux associé à une seconde estampille temporelle (t_{M}) ; et
la réception (208), par le client de diffusion en continu (60), à partir du serveur de diffusion en continu (80), du premier segment (400 ; 500) du flux associé à la première estampille temporelle (t₁).

2. Procédé (2) selon la revendication 1, comprenant
l'envoi de l'indication (402 ; 502 ; M₁, M₂) par un serveur de diffusion en continu (80) en réponse à la demande pour le premier segment (400, 500) et lorsqu'il est déterminé que la première estampille temporelle (t₁) est en dehors de l'intervalle de temps donné [t_{M} ;t_{M} + tₛ[ qui comporte la seconde estampille temporelle (t_{M}).

3. Procédé (2) selon la revendication 1 ou la revendication 2, dans lequel le deuxième segment (300₁) ou le troisième segment (300₂) du flux associé à la seconde estampille temporelle (t_{M}) est demandé par au moins un client de diffusion en continu (60) supplémentaire.

4. Procédé (2) selon l'une des revendications 1 à 3, dans lequel la réception (208) de l'indication (402 ; 502 ; M₁, M₂) comprend
la réception (208) de l'indication (402, M₁, M₂) codée dans une partie d'un message multipartie HTTP (4) et la réception (208) du premier segment (400) du flux associé à la première estampille temporelle (t₁) dans une autre partie du message multipartie HTTP (4).

5. Procédé (2) selon l'une des revendications 1 à 3, dans lequel la réception (208) de l'indication (402 ; 502 ; M₁, M₂) comprend
la réception (208) de l'indication (502, M₁, M₂) codée dans un fichier de manifeste (5) du flux.

6. Procédé (2) selon l'une des revendications 1 à 5, comprenant
l'envoi (204), par le client de diffusion en continu (60), d'une demande pour le deuxième segment (300₁) ou le troisième segment (300₂) du flux associé à la seconde estampille temporelle (t_{M}) sur la base de l'indication (402 ; 502 ; M₁, M₂) ; et
la réception (210) et la mise en mémoire tampon (212), par le client de diffusion en continu (60), du deuxième segment (300₁) ou du troisième segment (300₂) du flux associé à la seconde estampille temporelle (t_{M}).

7. Procédé (2) selon la revendication 6, comprenant
le rendu (214, 116, 118), par le client de diffusion en continu (60), de l'un parmi le premier segment (400 ; 500) et le deuxième ou le troisième segment (300₁ ; 300₂) reçus du flux conformément à l'une des moins récentes parmi la première estampille temporelle et la seconde estampille temporelle respectives.

8. Procédé (2) selon la revendication 7, dans lequel le rendu (214, 116, 118) de celui parmi le premier segment (400 ; 500) et le deuxième ou le troisième segment (300₁ ; 300₂) reçus du flux comprend
le rendu (216) du premier segment (400 ; 500) du flux associé à la première estampille temporelle (t₁), ou
le rendu (218) du deuxième ou du troisième segment (300₁ ; 300₂) mis en mémoire tampon du flux associé à la seconde estampille temporelle (t_{M}).

9. Procédé (2) selon l'une des revendications 6 à 8, dans lequel l'envoi (202) de la demande pour le premier segment (400 ; 500) du flux associé à la première estampille temporelle (t₁) comprend
l'arrêt de l'envoi (202) de la demande pour le premier segment (400 ; 500) en réponse au rendu (216) de celui parmi le premier segment (400 ; 500) et le deuxième ou le troisième segment (300₁ ; 300₂) reçus impliquant le rendu (208) du deuxième ou troisième segment (300₁ ; 300₂) mis en mémoire tampon du flux.

10. Dispositif (6) configuré pour fonctionner en tant que nœud utilisateur, comprenant un client de diffusion en continu (60) pouvant fonctionner pour réaliser le procédé (2) selon l'une des revendications 1 à 9.

11. Dispositif (7) configuré pour fonctionner en tant que nœud de réseau, comprenant un client de diffusion en continu (60) pouvant fonctionner pour réaliser le procédé (2) selon l'une des revendications 1 à 9.

12. Procédé (3) de fonctionnement d'un serveur de diffusion en continu (80), le procédé (3) comprenant
la réception (302), par le serveur de diffusion en continu (80), d'une demande, à partir d'un client de diffusion en continu (60), pour un premier segment (400 ; 500) d'un flux associé à une première estampille temporelle (t₁) ; et
en réponse au serveur de diffusion en continu (80) déterminant que la première estampille temporelle (t₁) est en dehors d'un intervalle de temps donné [t_{M} ;t_{M} + _{S}[ qui comporte une seconde estampille temporelle (t_{M}), l'envoi (308), par le serveur de diffusion en continu (80), au client de diffusion en continu (60), d'une indication (402 ; 502 ; M₁, M₂) permettant d'identifier un deuxième segment (300₁) ou un troisième segment (300₂) du flux associé à la seconde estampille temporelle (t_{M}) et l'envoi (308), au client de diffusion en continu (60), du premier segment (400 ; 500) du flux associé à la première estampille temporelle (t₁).

13. Procédé (3) selon la revendication 12, comprenant en outre
en réponse à la première estampille temporelle (t₁) se situant dans l'intervalle de temps donné [t_{M} ;t_{M} + t_{S}[ l'envoi (310), par le serveur de diffusion en continu (80), du deuxième segment (300₁) ou du troisième segment (300₂) du flux associé à la seconde estampille temporelle (t_{M}).

14. Procédé (3) selon la revendication 12 ou la revendication 13, dans lequel l'envoi (308) de l'indication (402 ; 502 ; M₁, M₂) comprend
l'envoi (308) de l'indication (402, M₁, M₂) codée dans une partie d'un message multipartie HTTP (4) et l'envoi (308) du premier segment (400) du flux associé à la première estampille temporelle (t₁) codé dans une autre partie du message multipartie HTTP (4).

15. Procédé (3) selon la revendication 12 ou la revendication 13, dans lequel l'envoi (308) de l'indication (402 ; 502 ; M₁, M₂) comprend
l'envoi (308) de l'indication (502 ; M₁, M₂) dans un fichier de manifeste (5) du flux.
